# EUROPEAN PATENT SPECIFICATION

(11) **EP 0 733 814 B1**
(45) Date of publication and mention of the grant of the patent: **31.05.2000**
(21) Application number: 96104019.3
(22) Date of filing: 14.03.1996
(51) Int. Cl.: F16C 1/12, F16C 1/14, F16H 61/36

(54) **A positioning device for control cables**
Stellvorrichtung für Bowdenzüge
Dispositif de positionnement pour câbles de commande

(30) Priority: 17.03.1995 IT TO950068 U
(43) Date of publication of application: 25.09.1996
(73) Proprietor: FIAT AUTO S.p.A., 10135 Torino (IT)
(72) Inventor: Lo Conte, Fulvio, 10126 Torino To (IT)
(74) Representative: Di Francesco, Gianni

(56) References cited:
- DE-C- 813 102
- FR-A- 2 366 618
- GB-A- 531 212
- GB-A- 2 214 593
- US-A- 1 942 273
- US-A- 2 769 352
- US-A- 3 000 231

## Description

### Description of the Invention

The present invention refers to a positioning device for flexible cables, in particular for the type used in autovehicle gearshifts according to the preamble of claim 1.

Some flexible cables for this kind of application field do not have devices for eliminating the clearances, therefore, if no other similar means are provided in the components of the kinematic chain, problems might arise related to improper command transmission.

Another problem with the cable controls, is the need of marking intermediate positions between the cable natural limit stops, so that the run length would always be substantially the same, in either way, independently from the summation of the machining tolerances relative to the entire control system components.

DE-C-813102 shows a positioning device of the above-mentionned type which comprises a core which slides within a sheath, stopping means connected to the sheath and a spring connected to the core and co-coperating with said stopping means to define the position of the core in relation to the sheath. Such a device is not easy to control since the spring is completely surrounded by the stopping means.

The object of the present invention is to solve the last mentionned problem in a simple and inexpensive way. Said object is achieved through a positioning device as claimed in the second portion of claim 1.

Further characteristics and advantages will be clear from the following, non limiting, description, provided for example purposes only, which refers to the attached drawings, in which:

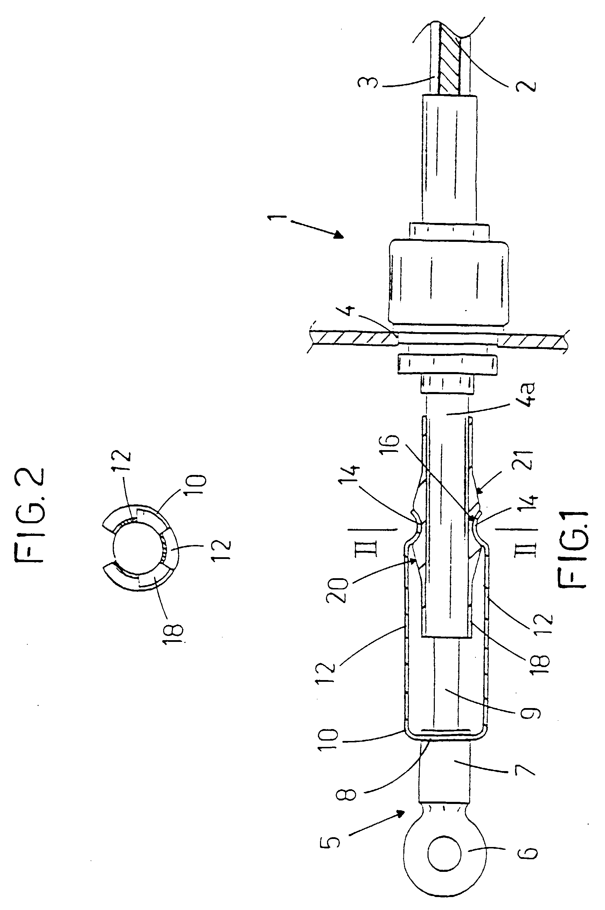

Figure 1 is a partial cross section view of a flexible cable provided with the device of the invention, and
Figure 2 is a cross section view of the device taken along line II-II of Figure 1.

With reference to the drawings, numeral 1 indicates a flexible cable used for the control transmission, which is caused by the displacement of the gear lever located inside the motor vehicle, to the internal control shafts and then to an motor vehicle gearshift.

Said cable 1, comprises a core 2 which slides within a sheath 3 of defined length, and is held in a fixed seat 4, obtained generally by means of a bracket integral with the gearbox (not shown). The sheath ends with a tubular rigid element 4a beyond the fixed seat 4.

The core end 2 of the cable 1 which extends beyond the tubular element 4a, is provided with a cable terminal 5, formed by a connection slot 6 and by a cylindrical element 7, provided with a groove 8 along the circumference and extending through a bar 9, capable of being connected with core 2 since both have the same section.

In said groove 8 there is inserted a small tongs element 10, provided with at least two elastic plates 12, extending in parallel with bar 9 towards sheath 3 up to incorporate the end portion 4a. The plates 12 have the free ends 14 which present projections inwardly directed (towards the sheath), and which are able to be positioned in a stop seat 16 obtained on the outside surface of a tubular element 18, preferably made of plastic material, integral with the end portion 4a of the sheath 3, which is beyond the fixed seat 4.

The seat 16, which projects from the outside surface of the tubular element, joins said outside surface through two inclined surfaces 20, 21.

The length of the plates 12 is calculated in such a way that, when the cable 1 is in the rest position (the gearshift is in neutral position), the projections of ends 14 are positioned in the seat 16, on the tubular element 18. Naturally the position of the tongs element 10 and of the tubular element 18 can be inverted, i.e., the two can be alternatively connected to the sheath or to the core, without departing from the scope of the invention.

Under normal working conditions, when the cable is pushed or pulled, for instance to insert or select a gear, depending on whether it is the selection or the clutch cable, the ends 14 of the plates 12 are pulled out from seat 16 and positioned on either one of the two inclined surfaces 20, 21, depending on the direction of the cable displacement, thus contributing to keep, through the pressure exercised by the elasticity of the plates 12, the core 2 of the cable 1 in the position it has reached.

The inclined surfaces 20 always allow to eliminate the clearances even in presence of different actuation lengths among possible positions of a speed gear (gearshift), which might not be the case if they would be substituted, for instance, by limit stop seats.

The plate ends could possibly be provided with rollers or other means capable to decrease the friction on the surface of the tubular element 18, without departing from the scope of the present invention.

## Claims

1. A positioning device capable of eliminating the clearances of the flexible control cables, in particular of the ones of the type used in the autovehicle gearshifts, comprising a core (2) which slides within a sheath (3), elastic means (10) connected to the core (2) and stopping means (18) integral with the sheath (3) and capable to cooperate with said elastic means (10) in order to define the position of the core (2) in relation to the sheath (3), said elastic means (10) being formed by a tongs element, provided with at least two elastic plates (12) characterized in that the ends (14) of said plates (12) extend up to incorporate and surround the end portion (4a) of the sheath (3) in order to cooperate with said stopping means (18).

2. A positioning device according to claim 1, characterized in that the tongs element (10) is connected to a cable terminal (5) integral with the core (2) of the cable (1).

3. A positioning device according to claim 1, characterized in that the ends (14) of the plates (12) project inwardly.

4. A positioning device according to claim 1, characterized in that the stopping means are formed by a tubular element (18), integral with the end portion (4a) of the sheath (3), and are provided with a projecting seat (16), capable to cooperate with the ends (14) of said plates (12).

5. A positioning device according to claim 4, characterized in that said seat (16) joins the outside wall of the tubular element (18), by means of inclined surfaces (20,21).

## Patentansprüche

1. Stellvorrichtung zur Beseitigung des Spiels von flexiblen Bowdenzügen, insbesondere der Art, wie sie in Gangschaltungen von Kraftfahrzeugen verwendet werden, umfassend eine Seele (2), die in einer Hülse (3) gleitet, ein mit der Seele (2) verbundenes elastisches Element (10) und ein mit der Hülse (3) einstückig verbundenes Halteelement (18), welches in der Lage ist, mit dem elastischen Element (10) zusammenzuwirken, um die Position der Seele (2) bezüglich der Hülse (3) zu definieren, wobei das elastische Element (10) aus einem Zangenelement gebildet ist, welches mit mindestens zwei elastischen Platten (12) ausgestattet ist,
dadurch gekennzeichnet,
daß die Enden (14) der Platten sich bis zum Endbereich (4a) der Hülse erstrecken und diesen umgeben, um mit dem Halteelement (18) zusammenzuwirken.

2. Stellvorrichtung nach Anspruch 1,
dadurch gekennzeichnet,
daß das Zangenelement (10) mit einem Bowdenzugendstück (5) verbunden ist, das eine Einheit mit der Seele (2) des Bowdenzugs (1) bildet.

3. Stellvorrichtung nach Anspruch 1,
dadurch gekennzeichnet,
daß die Enden (14) der Platten (12) nach innen ragen.

4. Stellvorrichtung nach Anspruch 1,
dadurch gekennzeichnet,
daß die Halteelemente durch ein röhrenförmiges Element (18) gebildet sind, welches einstückig mit dem Endbereich (4a) der Hülse (3) verbunden ist, und mit einem vorstehenden Sitz (16) versehen sind, der in der Lage ist, mit den Enden (14) der Platten (12) zusammenzuwirken.

5. Stellvorrichtung nach Anspruch 4,
dadurch gekennzeichnet,
daß der Sitz (16) mittels geneigter Flächen (20, 21) an der Außenwand des röhrenförmigen Elements (18) anliegt.

## Revendications

1. Dispositif de positionnement permettant d'éliminer les jeux nuisibles des câbles de commande souples, en particulier des câbles du type utilisé dans les mécanismes de changements de vitesse de véhicules automobiles, comprenant une âme (2) qui coulisse à l'intérieur d'une gaine (3), un moyen élastique (10) relié à l'âme (2) et un moyen d'arrêt (18) solidaire de la gaine (3) et pouvant coopérer avec ledit moyen élastique (10) de manière à définir la position de l'âme (2) par rapport à la gaine (3), ledit moyen élastique (10) étant formé par un élément de pince, muni d'au moins deux plaques élastiques (12), caractérisé en ce que les extrémités (14) desdites plaques (12) incorporent et entourent la partie d'extrémité (4a) de la gaine (3) afin de coopérer avec ledit moyen d'arrêt (18).

2. Dispositif de positionnement selon la revendication 1, caractérisé en ce que l'élément de pince (10) est relié à une terminaison de câble (5) solidaire de l'âme (2) du câble (1).

3. Dispositif de positionnement selon la revendication 1, caractérisé en ce que les extrémités (14) des plaques (12) font saillie vers l'intérieur.

4. Dispositif de positionnement selon la revendication 1, caractérisé en ce que le moyen d'arrêt est formé par un élément tubulaire (18), solidaire de la partie d'extrémité (4a) de la gaine (3), et est muni d'un siège en saillie (16), pouvant coopérer avec les extrémités (14) desdites plaques (12).

5. Dispositif de positionnement selon la revendication 4, caractérisé en ce que ledit siège (16) rejoint la paroi extérieure de l'élément tubulaire (18), au moyen de surfaces inclinées (20, 21).
